(19) Europäisches Patentamt
European Patent Office
Office européen des brevets

(11) EP 3 233 933 B1

(12) # FASCICULE DE BREVET EUROPEEN

(45) Date de publication et mention de la délivrance du brevet:
**06.11.2019 Bulletin 2019/45**

(21) Numéro de dépôt: **15823675.2**

(22) Date de dépôt: **18.12.2015**

(51) Int Cl.:
***C08F 2/38*** (2006.01) ***C08F 293/00*** (2006.01)
***C08F 4/34*** (2006.01) ***C09D 153/00*** (2006.01)
***C09J 153/00*** (2006.01)

(86) Numéro de dépôt international:
**PCT/FR2015/053625**

(87) Numéro de publication internationale:
**WO 2016/097649 (23.06.2016 Gazette 2016/25)**

(54) **POLYMERISATION RADICALAIRE D'ALCOXYAMINES A BASSE TEMPERATURE**

RADIKALISCHE NIEDERTEMPERATURPOLYMERISIERUNG VON ALKOXYAMINEN

LOW-TEMPERATURE RADICAL POLYMERISATION OF ALKOXYAMINES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2014 FR 1462678**

(43) Date de publication de la demande:
**25.10.2017 Bulletin 2017/43**

(73) Titulaire: **Arkema France**
**92700 Colombes (FR)**

(72) Inventeurs:
- **BOURRIGAUD, Sylvain**
**64340 Morlanne (FR)**
- **CAZAUMAYOU, Sylvie**
**40100 Dax (FR)**
- **INOUBLI, Raber**
**69100 Villeurbanne (FR)**

(56) Documents cités:
**EP-A1- 1 120 430** **FR-A1- 2 859 476**
**US-A1- 2013 053 517**

- **STEVEN J. TEERTSTRA ET AL: "Verdazyl-Mediated Polymerization of Styrene", MACROMOLECULAR SYMPOSIA., vol. 248, no. 1, 1 février 2007 (2007-02-01), pages 117-125, XP055223012, DE ISSN: 1022-1360, DOI: 10.1002/masy.200750212**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un procédé de polymérisation radicalaire d'alcoxyamines à basse température, typiquement à des températures aussi basses que moins 50°C en présence d'un réducteur de nitroxydes. L'invention concerne également l'utilisation du procédé de l'invention en vue d'obtenir des objets, ainsi que les objets obtenus.

La polymérisation radicalaire est une technique de polymérisation bien connue. L'utilisation d'alcoxyamines permet de préparer des copolymères à blocs.

Ces polymérisations sont presque toujours conduites à des températures au moins supérieures à 100 °C. Une exception concerne l'utilisation du nitroxyde de N-tertiobutyl-1-diéthylphosphono-2,2 diméthylpropyl aussi appelé SG1 car elle permet de démarrer la polymérisation dès 50°C. Ce nitroxyde dont on rappelle la formule ci dessous est plus particulièrement décrit dans EP0760824 :

SG1 :

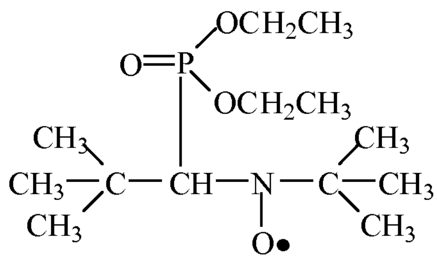

Si ce nitroxyde présente de nombreux avantages tels que des températures de polymérisations modérées, un bon contrôle de nombreux monomères, Il ne permet pas de conduire des polymérisations à basse température telle que l'ambiante voir en dessous de l'ambiante dans des temps compatibles avec des cycles industriels lorsque qu'il est issu des alcoxyamines, ces dernières ne pouvant générer le radical persistant qu'à des températures supérieures à 50 °C.

WO03/074572 décrit la possibilité de polymériser de façon contrôlée par la voie nitroxyde à des températures comprises entre 50°C et 160°C, mais de façon préférée entre 80°C et 100°C. La réaction n'est donc pas possible par exemple à l'ambiante.

Or il existe un réel besoin de pouvoir effectuer des polymérisations à d'aussi basses températures, voir à des températures négatives par exemple dans le cas de la polymérisation de pièces de très grandes dimensions (pâles d'éoliennes, coques de bateaux par exemple) pour lesquelles une installation de chauffage de type four est très coûteuse. Une polymérisation effectuée à température ambiante voir même à des températures négatives serait donc une avancée majeure sur le plan économique ou permettrait par exemple dans le cas de colles multi-composantes d'être utilisables en conditions sévères de températures négatives.

D'autre part, dans une formulation comprenant des copolymères à blocs, l'introduction de copolymères à blocs synthétisés dans une étape préliminaire engendre le plus souvent une augmentation très importante de la viscosité du mélange ce qui constitue un obstacle majeur pour des procédés nécessitant une viscosité faible comme les procédés d'infusion pour la fabrication de matériaux composites, ou des procédés à cadence rapide pour lesquels le comportement rhéologique de la préparation est crucial. Il apparait alors judicieux de préparer le copolymère à bloc in-situ, c'est-à-dire durant la mise en forme du matériau et ce à basse température (>0°C), typiquement à l'ambiante, c'est-à-dire autour de 25°C.

Dans d'autres situations, la polymérisation à basse température présente des avantages (limitation de réactions secondaires, non dégradation de certaines molécules sensibles à la température) mais aussi permet de moins consommer d'énergie ou encore de minimiser la pression dans les réacteurs de synthèse.

En polymérisation radicalaire classique il est bien connu lorsque l'amorceur utilisé est un peroxyde que l'addition d'amines telles que la diméthyle para toluidine (QIU K. et al, polymer communications, N°1, 76-81, 1985) permet un amorçage à basse température. Ce système rédox est utile pour préparer des colles bi-composantes utilisables à l'ambiante par exemple.

La demanderesse à maintenant découvert, contre toute attente, qu'une alcoxyamine, en présence d'un réducteur de nitroxyde, ré-amorce la polymérisation de monomères et ce même à des températures négatives, avec une cinétique rapide c'est-à-dire avec des temps compatibles avec des applications industrielles, typiquement de quelques minutes à quelques heures.

Résumé de l'invention :

L'invention concerne un procédé de polymérisation radicalaire comprenant les étapes suivantes :

- Mélange comprenant au moins un monomère en présence d'au moins un réducteur de nitroxyde et au moins une alcoxyamine,
- conduite de la polymérisation du mélange à une température comprise entre -50°C et 80 °C jusqu'à conversion complète des monomères.

Description détaillée :

Le procédé de l'invention peut être mis en œuvre avec tout type d'alcoxyamine. Ce peut être également une poly-alcoxyamine, susceptible de générer plusieurs radicaux nitroxydes, ou encore une alcoxyamine macromoléculaire ou poly-alcoxyamine macromoléculaire issue d'une étape de polymérisation entre au moins un monomère et une alcoxyamine.
Ainsi selon une première forme de l'invention, au moins une des alcoxyamines est monofonctionnelle.
Selon une deuxième forme de l'invention, au moins une des alcoxyamines est multifonctionnelle.
L'alcoxyamine ou la polyalcoxyamine est décrite par la formule générale $Z(-T)_n$ dans laquelle Z désigne un groupement multivalent, T un nitroxyde et n un entier supérieur ou égal à 1, de préférence compris entre 2 et 10, avantageusement compris entre 2 et 8 et de façon encore préférée compris entre 2 et 4, bornes comprises.
n représente la fonctionnalité de l'alcoxyamine, c'est-à-dire le nombre de radicaux nitroxydes T libérables par l'alcoxyamine selon le mécanisme :

$$Z(-T)_n \rightleftarrows Z + nT$$

Cette réaction est activée par la présence d'un réducteur de nitroxydes qui peut être par exemple un radical issu de la décomposition d'un amorceur radicalaire soit par la température, soit par une reaction redox. En présence de monomère(s), l'alcoxyamine activée amorce une polymérisation. Le schéma ci-dessous illustre la préparation d'un copolymère polyM2-polyM1-polyM2 à base d'une alcoxyamine pour laquelle n=2. Le monomère M1 est d'abord polymérisé après activation de l'alcoxyamine, puis une fois le bloc polyM1 terminé, le monomère M2 est ensuite polymérisé :

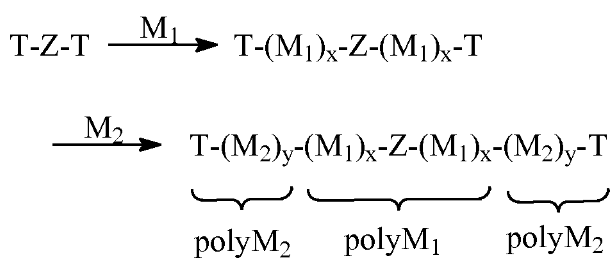

Le principe de la préparation de copolymères à blocs reste valable pour n supérieur ou égal à 1.
Z désigne un groupement multivalent c'est-à-dire un groupement susceptible de libérer après activation plusieurs sites radicalaires. L'activation en question se produit par rupture de liaison covalente Z-T.
A titre d'exemple, Z peut être choisi parmi les groupements (I) à (VIII) suivants :

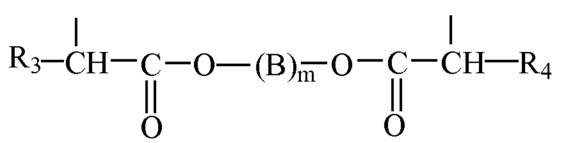 (I)

dans laquelle $R_3$ et $R_4$ identiques ou différents, représentent un radical alkyle, linéaire ou ramifié ayant un nombre d'atomes de carbone allant de 1 à 10, des radicaux phényle ou thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; un radical benzyle, un radical cycloalkyle ayant un nombre d'atomes de carbone allant de 3 à 12, un radical comportant une ou plusieurs insaturations ; B représente un radical alkylène linéaire ou ramifié, ayant un nombre d'atomes de carbone allant de 1 à 20 ; m est un nombre entier allant de 1 à 10 ;

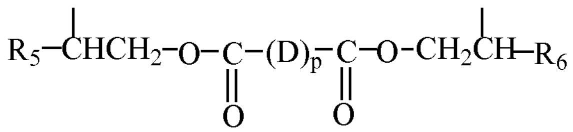 (II)

dans laquelle $R_5$ et $R_6$, identiques ou différents, représentent des radicaux aryle, pyridyle, furyle, thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; D représente un radical alkylène, linéaire ou ramifié, ayant un nombre d'atomes de carbone allant de 1 à 6, un radical phénylène, un radical cycloalkylène ; p étant un nombre entier allant de 1 à 10 ;

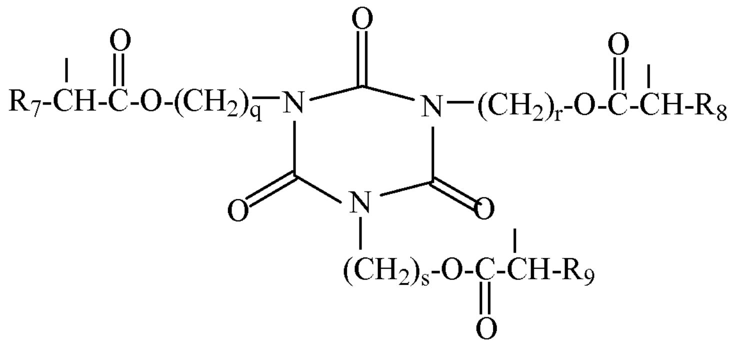 (III)

dans laquelle $R_7$, $R_8$ et $R_9$, identiques ou différents, ont les mêmes significations que $R_3$ et $R_4$ de la formule (I), q, r et s sont des nombres entiers allant de 1 à 10 ;

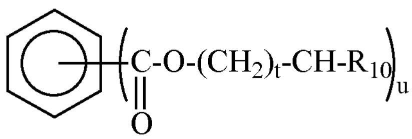 (IV)

dans laquelle $R_{10}$ a la même signification que $R_5$ et $R_6$ de la formule (II), t est un nombre entier allant de 1 à 4, u est un entier compris entre 2 et 6 (le groupement aromatique est substitué);

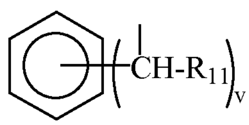 (V)

dans laquelle $R_{11}$ a la même signification que le radical $R_{10}$ de la formule (IV) et v est un entier compris entre 2 et 6 ;

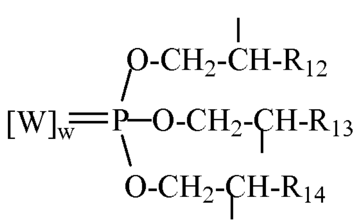 (VI)

dans laquelle $R_{12}$, $R_{13}$ et $R_{14}$, identiques ou différents, représentent un radical phényle, éventuellement substitué par un atome d'halogène tel que Cl, Br, ou bien par un radical alkyle, linéaire ou ramifié, ayant un nombre d'atomes de carbone allant de 1 à 10 ; W représente un atome d'oxygène, de soufre, de sélénium, w est égal à zéro ou 1 ;

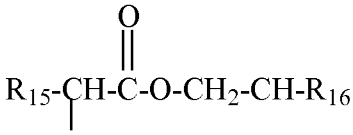

(VII)

dans laquelle $R_{15}$ a la même signification que $R_3$ de la formule (I), $R_{16}$ a la même signification que $R_5$ ou $R_6$ de la formule (II) ;

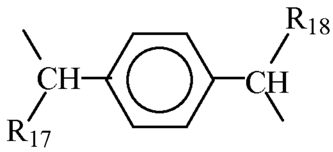

(VIII)

dans laquelle $R_{17}$ et $R_{18}$ identiques ou différents représentent un atome d'hydrogène, un radical alkyle, linéaire ou ramifié ayant un nombre d'atomes de carbone allant de 1 à 10, un radical aryle, éventuellement substitué par un atome d'halogène ou un hétéro atome.

T désigne un nitroxyde qui est un radical libre stable présentant un groupement $=N-O^{\bullet}$ c'est-à-dire un groupement sur lequel est présent un électron célibataire. On désigne par radical libre stable un radical tellement persistant et non réactif vis-à-vis de l'air et de l'humidité dans l'air ambiant, qu'il peut être manipulé et conservé pendant une durée bien plus longue que la majorité des radicaux libres (voir à ce propos, Accounts of Chemical Research 1976, 9, 13-19). Le radical libre stable se distingue ainsi des radicaux libres dont la durée de vie est éphémère (de quelques millisecondes à quelques secondes) comme les radicaux libres issus des amorceurs habituels de polymérisation comme les peroxydes, les hydroperoxydes ou les amorceurs azoïques. On peut dire qu'un radical libre est stable s'il n'est pas amorceur de polymérisation et si la durée de vie moyenne du radical est d'au moins une minute.

T est représenté par la structure :

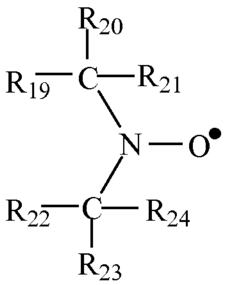

(IX)

dans laquelle $R_{19}$, $R_{20}$, $R_{21}$, $R_{22}$, $R_{23}$ et $R_{24}$ désignent des groupements :

- alkyles linéaires ou branchés en $C_1$-$C_{20}$, de préférence en $C_1$-$C_{10}$ tels que méthyle, éthyle, propyle, butyle, isopropyle, isobutyle, tertiobutyle, néopentyle, substitués ou non,
- aryles en $C_6$-$C_{30}$ substitués ou non tels que benzyle, aryl (phényl)
- cycliques saturés en $C_1$-$C_{30}$

et dans laquelle les groupements $R_{19}$ et $R_{22}$ peuvent faire partie d'une structure cyclique $R_{19}$-CNC-$R_{22}$ éventuellement substituée pouvant être choisie parmi :

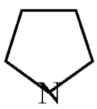
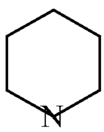
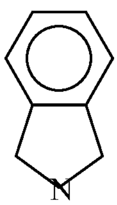
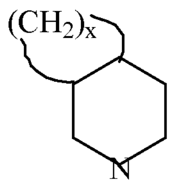
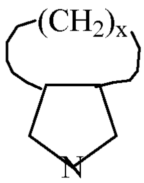

dans lesquelles x désigne un entier compris entre 1 et 12.

A titre d'exemples, on pourra utiliser les nitroxydes suivants :

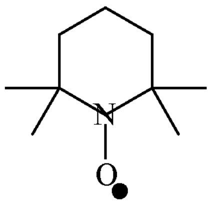

TEMPO

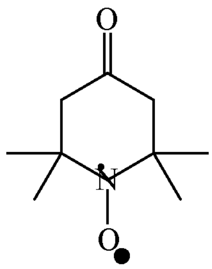

OXO-TEMPO

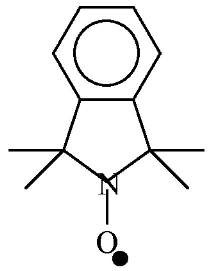

De manière particulièrement préférée, les nitroxydes de formule (X) sont utilisés:

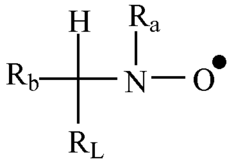

(X)

$R_a$ et $R_b$ désignant des groupements alkyles identiques ou différents possédant de 1 à 40 atomes de carbone, éventuellement reliés entre eux de façon à former un cycle et éventuellement substitués par des groupements hydroxy, alcoxy ou amino,

$R_L$ désignant un groupement monovalent de masse molaire supérieur à 15.42 g/mol, de préférence supérieur à 30 g/mol. Le groupement $R_L$ peut par exemple avoir une masse molaire comprise entre 40 et 450 g/mol. Il s'agit de préférence d'un groupement phosphoré de formule générale (XI) :

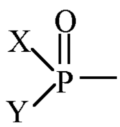

(XI)

dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, $R_L$ est un groupement phosphonate de formule :

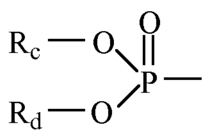

(XII)

dans lequel $R_c$ et $R_d$ sont deux groupements alkyles identiques ou différents, éventuellement reliés de manière à former un cycle, comprenant de 1 à 40 atomes de carbone, éventuellement substitués ou non.

Le groupement $R_L$ peut également comprendre au moins un cycle aromatique tel que le radical phényle ou le radical naphtyle, substitué par exemple par un ou plusieurs radical(aux) alkyle comprenant de 1 à 10 atomes de carbone.

Les nitroxydes de formule (X) sont préférés car ils permettent d'obtenir un bon contrôle de la polymérisation radicalaire des monomères (méth)acryliques comme cela est enseigné dans WO 03/062293. Les alcoxyamines de formule (XIII) ayant un nitroxyde de formule (X) sont donc préférées :

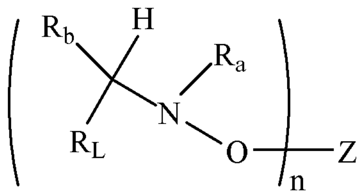

(XIII)

dans laquelle :

Z désigne un groupement multivalent ;
$R_a$ et $R_b$ désignent des groupements alkyles identiques ou différents possédant de 1 à 40 atomes de carbone, éventuellement reliés entre eux de façon à former un cycle et éventuellement substitués par des groupements hydroxy, alcoxy ou amino ;
$R_L$ désigne un groupement monovalent de masse molaire supérieur à 15.042 g/mol, de préférence supérieur à 30 g/mol. Le groupement $R_L$ peut par exemple avoir une masse molaire comprise entre 40 et 450 g/mol. Il s'agit de préférence d'un groupement phosphoré de formule générale (XI) :

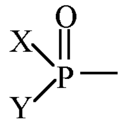

(XI)

dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, $R_L$ est un groupement phosphonate de formule :

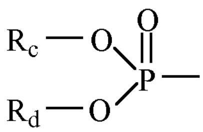

(XII)

dans lequel $R_c$ et $R_d$ sont deux groupements alkyles identiques ou différents, éventuellement reliés de manière à former un cycle, comprenant de 1 à 40 atomes de carbone, éventuellement substitués ou non.

Le groupement $R_L$ peut également comprendre au moins un cycle aromatique tel que le radical phényle ou le radical naphtyle, substitué par exemple par un ou plusieurs radical(aux) alkyle comprenant de 1 à 10 atomes de carbone.

A titre d'exemple de nitroxyde de formule (X) pouvant être porté par l'alcoxyamine (XIII), on peut citer :

- le N-tertiobutyl-1-phényl-2-méthylpropyl nitroxyde,
- le N-(2-hydroxyméthylpropyl)-1-phényl-2-méthylpropyl nitroxyde,
- le N-tertiobutyl-1-dibenzylphosphono-2,2-diméthyl-propyl nitroxyde
- le N-tertiobutyl-1-di(2,2,2-trifluoroéthyl)phosphono-2,2-diméthylpropyl-nitroxyde,
- le N-tertiobutyl[(1-diéthylphosphono)-2-méthylpropyl]nitroxyde,
- le N-(1-méthyléthyl)-1-cyclohexyl-1-(diéthyl-phosphono)nitroxyde,
- le N-(1-phénylbenzyl)-[(1-diéthylphosphono)-1-méthyléthyl]nitroxyde,
- le N-phényl-1-diéthylphosphono-2,2-diméthylpropylnitroxyde,
- le N-phényl-1-diéthylphosphono-1-méthyléthylnitroxyde,
- le N-(1-phényl2-méthylpropyl)-1-diéthylphosphonométhyléthylnitroxyde,
- ou encore le nitroxyde de formule

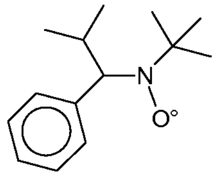

Le nitroxyde de formule (XIV) est particulièrement préféré :

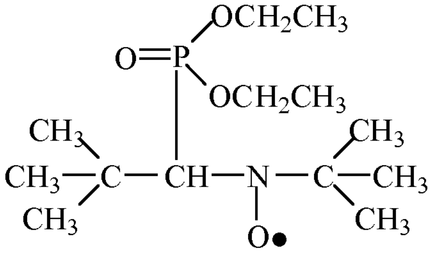

(XIV)

Il s'agit du N-tertiobutyl-1-diéthylphosphono-2,2-diméthylpropyl nitroxyde, couramment appelé SG1 pour simplifier.

L'alcoxyamine (I), et notamment l'alcoxyamine (XIII), peuvent être préparées par des recettes décrites par exemple dans ou dans FR2791979. Une méthode pouvant être utilisée consiste à réaliser le couplage d'un radical carboné avec un nitroxyde. Le couplage peut être réalisé à partir d'un dérivé halogéné en présence d'un système organométallique comme CuX/ligand (X=Cl ou Br) selon une réaction de type ATRA (Atom Transfer Radical Addition) tel que décrit par D. Greszta et coll. dans Macromolecules 1996, 29, 7661-7670.

$$Z(\text{-}X)_n + n\,T \xrightarrow[\text{solvant} \atop -\,n\,CuX_2/\text{ligand}]{+\,n\,CuX/\text{ligand}} Z(\text{-}T)_n$$

Des alcoxyamines pouvant être utilisées dans le cadre de l'invention sont représentées ci-dessous :

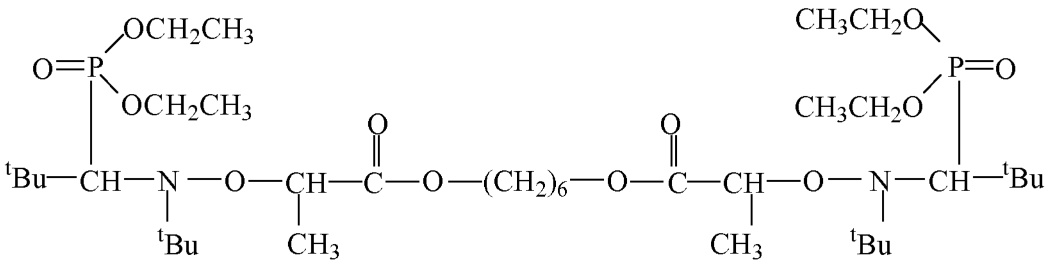

DIAMS

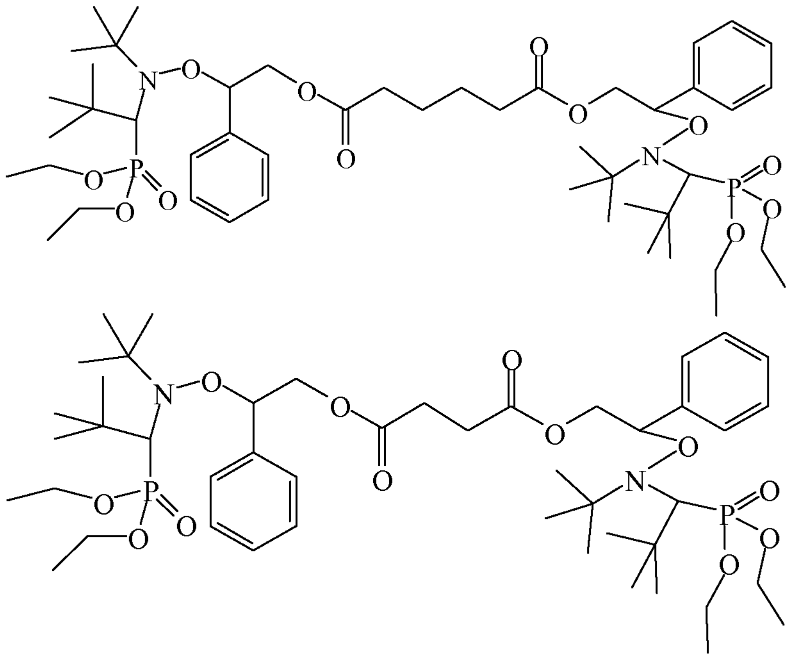

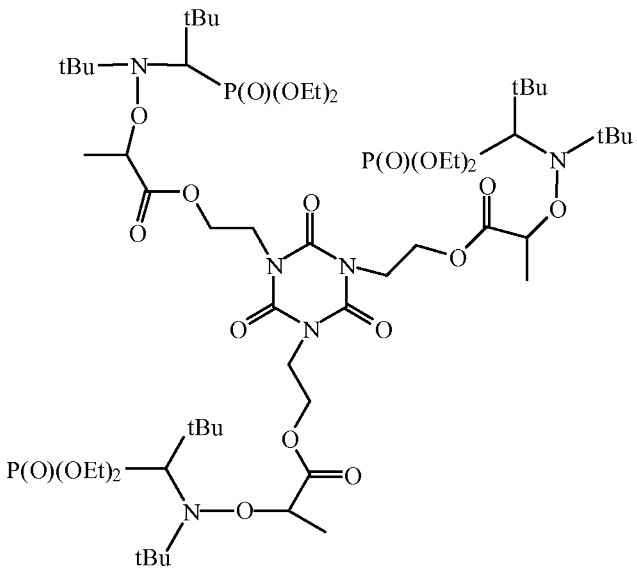

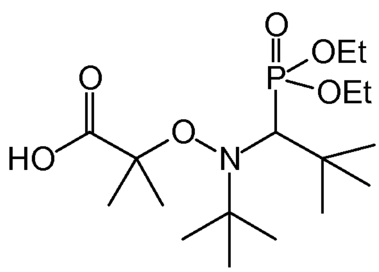

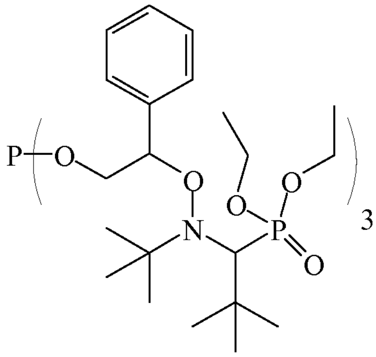

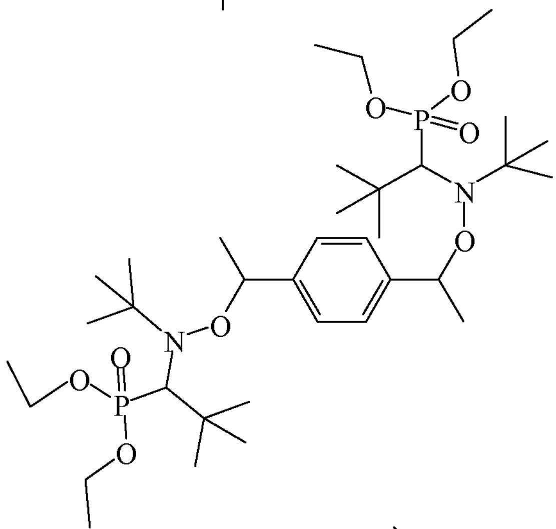

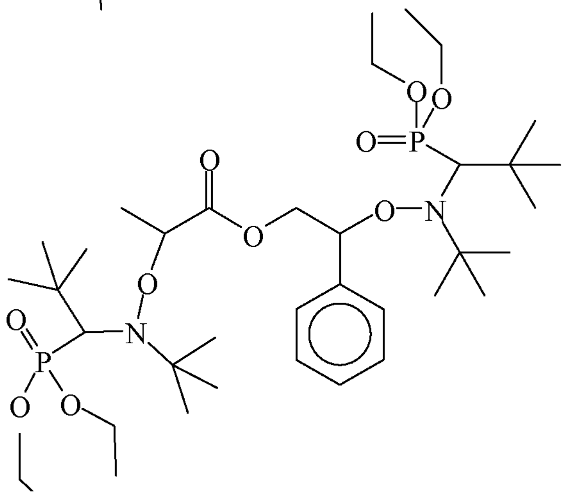

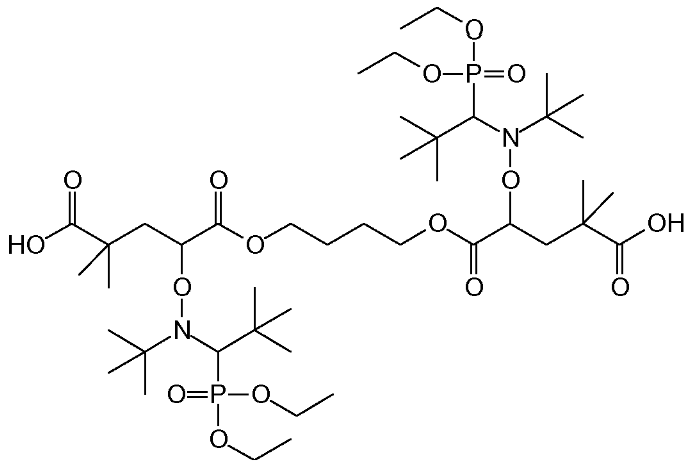

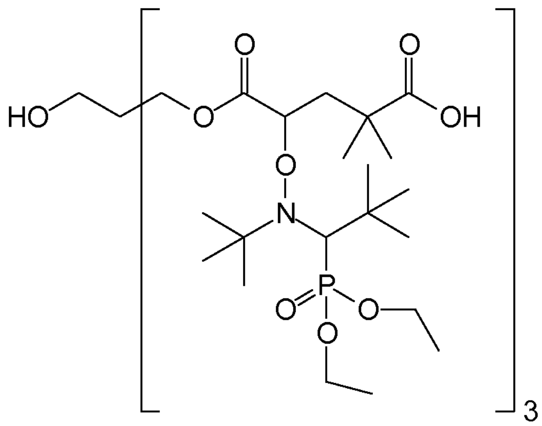

Les deux dernières alcoxyamine sont appelées DIAMINS et TRIAMINS respectivement et sont les alcoxyamines préférées.

On ne sortirait pas du cadre de la présente invention en combinant plusieurs alcoxyamines répondant à la formule (I), en particulier plusieurs alcoxyamines de formule (XIII). Ces mélanges pourraient comprendre ainsi par exemple une alcoxyamine ayant n1 nitroxydes attachés et une alcoxyamine ayant n2 nitroxydes attachés avec n1 différent de n2. Il pourrait s'agir aussi d'une combinaison d'alcoxyamines porteuses de nitroxydes différents.

S'agissant du réducteur de nitroxydes ils peuvent être de tous type. Cela peut être un mercaptan , un radical. De préférence, il d'agit d'un radical issu de la décomposition d'un amorceur radicalaire soit par la température, soit par une reaction redox, ou autre système redox pouvant générer des radicaux comme par exemple le couple methylene bis (diethyl malonate)-cérium IV, ou encore le couple $H_2O_2/Fe^{2+}$.

Par réducteur de nitroxyde, on entend tout composé susceptible de réagir avec un nitroxyde.

S'agissant de l'amorceur radicalaire, il peut être choisi parmi les peroxydes de diacyles, les peroxyesters, les peroxydes de dialkyle, les peroxyacétals, les composés azoïques. Des amorceurs radicalaires pouvant convenir sont par exemple le carbonate d'isopropyle, le peroxyde de benzoyle, de lauroyle, de caproyle, de dicumyle, le perbenzoate de tertiobutyle, le 2-éthyl perhexanoate de tertiobutyle, l'hydroperoxyde de cumyle, le 1,1-di(tert-butylperoxy)-3,3,5-trimethylcyclohexane, le peroxyisobutyrate de tertiobutyle, le peracétate de tertiobutyle, le perpivalate de tertiobutyle, le perpivalate d'amyle, le peroctoate de tertiobutyle. On ne sortirait pas du cadre de l'invention en utilisant un mélange d'amorceurs radicalaires choisis dans la liste ci-dessus. L'amorceur radicalaire préféré est un peroxyde, et plus particulièrement le peroxyde de benzoyle.

Selon une forme préférée, le radical est généré par la réaction entre un peroxyde et une amine.

S'agissant de l'amine, tout type d'amine susceptible de réagir avec un peroxyde peut être utilisé.
De façon préférée, il s'agit d'amines substituées, et plus particulièrement d'amines tri-substituées, parmi lesquelles on peut citer la N,N-diméthyle aniline (DMA) et ses dérivés para substitués telles que la diméthyle-p-toluidine (DMPT), la p-hydroxyméthyle-N,N-diméthyle aniline (HMDA), la p-nitro-N,N-N,N-diméthyle aniline (NDMA) et la p-diméthyle-amino benzaldéhyde (DMAB). Plus particulièrement, il s'agit de la diméthyle-p-toluidine.

La conduite de la polymérisation selon le procédé de l'invention peut être effectuée en masse, solution, suspension, ou encore émulsion.

Selon une variante de l'invention, l'alcoxyamine utilisée peut être préparée par un procédé de polymérisation radicalaire contrôlée par les nitroxydes similaire mais sans présence du réducteur de nitroxyde, à une température supérieure à 50°C. Il s'agit par exemple de faire un premier bloc comprenant au moins un monomère, qui ultérieurement sera mis dans les conditions de la présente invention, c'est-à-dire à basse température, typiquement à la température ambiante pour générer la polymérisation des autres blocs. On obtiendra donc un copolymère avec plusieurs blocs.

La synthèse de copolymères séquencés, ou copolymères à blocs utilise plusieurs techniques depuis de nombreuses années. Dans chacune de ces techniques, les températures utilisées pour la synthèse sont toujours très éloignées de l'ambiante et requièrent donc des conditions particulières de préparation, souvent incompatibles avec les procédés de fabrication utilisés dans les applications. Dans le procédé de l'invention, les températures de polymérisations sont comprisent entre -50°C et + 80°C, avantageusement entre -20°C et +80°C, de façon préférée entre 0°C et 80°C, de façon encore préférée entre 0°C et 50°C, et idéalement entre 10 et 35°C.

De nombreux travaux ont par conséquent consisté à synthétiser le copolymère à bloc dans une première étape, puis à l'introduire sous forme d'additif dans des matériaux choisis selon l'application visée. Il a été démontré que l'utilisation de ces additifs permettait d'obtenir des compromis de propriétés améliorés par rapport aux techniques antérieures habituellement utilisées. Toutefois, l'introduction de copolymères à blocs dans un matériau hôte requiert des outils et techniques de mélange particulières (à chaud, en voie solvant) en raison de la très forte viscosité de ces additifs. Le même effet limite également la teneur en copolymères à blocs pouvant être introduite dans le matériau final. Pour ces applications, le taux de polymère utilisable en tant qu'additif est limité par la viscosité engendrée. Dans le cas où la synthèse du copolymère se déroule directement dans une résine hôte, ou le mélange résine/durcisseur, comme cela peut être le cas dans la présente invention, la viscosité n'est plus un problème car elle apparait uniquement en fin de procédé. Ceci ouvre des opportunités nouvelles dans les domaines ou la viscosité est un facteur limitant tels que les revêtements, les procédés d'injection ou d'infusion de résine, les adhésifs...

La présente invention a le double avantage de permettre la synthèse du copolymère à blocs in situ dans le matériau hôte, de manière à obtenir une morphologie particulière plus favorable aux propriétés applicatives, et en conservant une viscosité initiale faible particulièrement favorable à la mise en œuvre du matériau additivé.

Le matériau hôte peut être un solvant, un polymère, un oligomère, une charge pigmentaire ou non de toute dimension et de tout type de facteur de forme, poreuse ou non, des fibres courtes ou longues, tissées ou non tissées, des nanotubes ou une combinaison de ces matériaux hôtes. Le matériau hôte peut aussi être un précurseur de polymère, par exemple tout système bi-composant ou non susceptible de polymériser indépendamment de la polymérisation mettant en jeu l'alcoxyamine, par exemple de façon non limitative une résine epoxy, polyurethane, polyester. On peut par exemple polymériser soit simultanément soit de façon séquentielle le matériau hôte et le matériau issus de la polymérisation de l'alcoxyamine.

En ce sens, la présente invention se rapproche des procédés décrits dans WO 03/062293 ou encore WO 06/06152 mais diffère de ces derniers par le fait que la température de synthèse du deuxième bloc est très significativement inférieure à celles décrites dans l'art antérieur, typiquement à température ambiante, ce qui est rendu possible par l'utilisation combinée d'un amorceur alcoxyamine macromoléculaire précédemment préparé lors d'une première étape classiquement décrite dans l'art antérieur, en présence d'un réducteur de nitroxyde et des monomères constitutifs du deuxième bloc.

Parmi les monomères qui peuvent être utilisés dans le procédé de l'invention, on peut citer les monomères présentant une ou plusieurs doubles laisons tels que les monomères vinylaromatiques comme le styrène ou les styrènes substitués notamment l'alpha-méthylstyrène, les monomères acryliques tels que l'acide acrylique ou ses sels, les acrylates d'alkyle (présentant on non plusieurs fonctions acryliques), de cycloalkyle ou d'aryle tels que l'acrylate de méthyle, d'éthyle, de butyle, d'éthylhexyle ou de phényle, les acrylates d'hydroxyalkyle tels que l'acrylate de 2-hydroxyéthyle, les acrylates d'étheralkyle tels que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxypolyéthylèneglycol-polypropylèneglycol ou leurs mélanges, les acrylates d'aminoalkyle tels que l'acrylate de 2-(diméthylamino)éthyle (ADAME), les acrylates fluorés, les acrylates silylés, les acrylates phosphorés tels que les acrylates de phosphate d'alkylèneglycol, les monomères méthacryliques comme l'acide méthacrylique ou ses sels, les méthacrylates d'alkyle, de cycloalkyle, d'alcényle ou d'aryle tels que le méthacrylate de méthyle (MAM), de lauryle, de cyclohexyle, d'allyle, de phényle ou de naphtyle, les méthacrylates d'hydroxyalkyle tels que le méthacrylate de 2-hydroxyéthyle ou le méthacrylate de 2-hydroxypropyle, les méthacrylates d'étheralkyle tels que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxypolyéthylèneglycol-polypropylèneglycol ou leurs mélanges, les méthacrylates d'aminoalkyle tels que le méthacrylate de 2-(diméthylamino)éthyle (MADAME), les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxy-éthylimidazolidone, le méthacrylate d'hydroxy-éthylimidazolidinone, le méthacrylate de 2-(2-oxo-1-imidazolidinyl)éthyle,

l'acrylonitrile, l'acrylamide ou les acrylamides substitués, la 4-acryloylmorpholine, le N-méthylolacrylamide, le méthacrylamide ou les méthacrylamides substitués, le N-méthylolméthacrylamide, le chlorure de méthacrylamido-propyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alcoxy) poly(alkylène glycol) vinyl éther ou divinyl éther, tels que le méthoxy poly(éthylène glycol) vinyl éther, le poly(éthylène glycol) divinyl éther, les monomères oléfiniques, parmi lesquels on peut citer l'éthylène, le butène, l'hexène et le 1-octène ainsi que les monomères oléfiniques fluorés, et les monomères vinylidéniques, parmi lesquels on peut citer le fluorure de vinylidène, seuls ou en mélange d'au moins deux monomères précités.

La présente invention porte également sur les applications de l'utilisation de ce procédé de synthèse à basse température. Ce procédé devient compatible avec des applications nombreuses et variées pour lesquelles la température d'application reste froide ou modérée.

En particulier la présente invention est avantageusement adaptée aux applications comme les vernis, les revêtements, les colles et adhésifs, le renforcement mécanique des matières plastiques, l'impression 3D, les matériaux composites car la température de polymérisation coïncide avec la température de l'application.

La présente invention porte également sur les matériaux hôtes comprenant les polymères ou copolymères issus du procédé de l'invention en raison de leurs uniques propriétés résultants de l'utilisation du procédé de l'invention, permettant notamment d'incorporer des quantités importantes de copolymères objet de l'invention aux matériaux hôtes utilisant le procédé de l'invention.

Exemple 1 :

Synthèse de l'alcoxyamine TRIAMINS

Dans un réacteur de 500 millilitre on introduit 206 g d'éthanol, 100 g de Blocbuider® (Arkema), 26.5 g de pentaeryhritol triacrylate (Sartomer SR444D). Le mélange est chauffé sous agitation à 80°C durant 4h. Le mélange réactionnel est ensuite soutiré puis l'éthanol est évaporé à l'aide d'un évaporateur rotatif. On obtient de façon quantitative 126 g de triamins.

Exemple 2 :

Synthèse d'une polyalcoxyamine macro-amorceur.

On introduit dans un réacteur métallique de 2 litres muni d'un agitateur à hélice, d'une double enveloppe de chauffage par circulation d'huile et d'une prise vide / azote :

- 643 g de d'acrylate de butyle
- 96 g de styrène
- 6 g de TRIAMINS.

Après introduction des réactifs, le mélange réactionnel est dégazé à trois reprises sous vide / azote. Le réacteur est alors fermé puis l'agitation (50 tr/min) et le chauffage (consigne de température : 125 °C) sont mis en route. La température du mélange réactionnel atteint 113 °C en 30 min environ. La pression s'établit vers 1,5 bar. La température du réacteur est maintenue en palier à 115°C pendant 522 min. On récupère après refroidissement 740 g d'un mélange à 70% d'extrait sec. L'acrylate de butyle en excès est ensuite éliminé par évaporation à 70°C sous pression réduite pendant 3 h. Le rapport en poids acrylate de butyle : styrène du macro radical obtenu est 83 : 17. L'analyse par GPC calibrée à l'aide d'échantillons de polystyrène du macro-amorceur donne les résultats suivants : $M_n$ : 129000 g/mol ; $M_w$ : 510000 g/mol ; polymolécularité : 3,9.

Exemple 3 :

Synthèse du copolymère non amorceur (PABu/Styrène radicalaire).

Dans un réacteur agité en inox communément utilisé par l'homme de l'art, on introduit un mélange composé de 500g d'acrylate de butyle, 70g de styrène,966g de toluène, 0.1854g d'AIBN (Vazo64 de Dupont), 0.6g de n-dodecyl mercaptan. Le réacteur est mis sous 2 bars de pression d'azote et chauffé à une température de 85°C pendant 3h. Le mélange est ensuite refroidi à température ambiante (20°C) puis séché sous vide dans une étuve pendant 16h à 125°C et 100mbar de pression absolue. On obtient alors le copolymère sec de polyacrylate de butyle-co-styrène non amorceur.

Exemple 4 :

Les polymérisations sont réalisées en masse, sans solvant, à température ambiante 25°C à pression atmosphérique.
On cherche dans ces exemples à polymériser le méthacrylate de méthyle sur la polyalcoxyamine macro-amorceur de l'exemple 2. Le peroxyde choisi est les peroxyde de benzoyle (BPO), l'amine est la diméthyle para toluidine (DMPT).
Les solutions (sans le peroxyde) sont préparées sous agitation magnétique, puis dégazées sous vide pendant 15 minutes ceci afin d'éliminer les gaz dissouts qui pourraient nuire à la polymérisation. La solution (20 g de mélange réactionnel) est coulée dans un flacon en verre de 30 ml. On rajoute le peroxyde puis le flacon est refermé à l'aide d'une capsule étanche.
Une sonde de température introduite dans le flacon au travers de la capsule enregistre l'évolution de la température de façon à suivre la polymérisation dans l'échantillon. Lorsque le profil de température présente un maximum on note le temps correspondant.
Les résultats sont donnés dans le tableau 1 ; les pourcentages indiqués sont massiques.

| Tableau 1 | Polyalcoxyamine de l'exemple 2 | PABu/ styrène radicalaire | BPO | DMPT | MAM | temps correspondant (min) | |
|---|---|---|---|---|---|---|---|
| essai référence 1 | 0% | 0% | 1% | 0.1% | 98.9% | 316 | référence 1 |
| essai référence 2 | 0% | 15% | 1% | 0.1% | 83.9% | 340 | référence 2 |
| essai 1 | 15% | 0% | 0% | 0% | 85% | >1000 | comparatif |
| essai 2 | 15% | 0% | 1% | 0% | 84% | >1000 | comparatif |
| essai 3 | 15% | 0% | 0% | 0.1% | 84.9% | >1000 | comparatif |
| essai 4 | 15% | 0% | 1% | 0.1% | 83.9% | 153 | invention |
| essai 5 | 7.5% | 0% | 1% | 0.1% | 91.4% | 245 | invention |
| essai 6 | 15% | 0% | 1% | 0.1% | 83.9% | 153 | invention |
| essai 7 | 15% | 0% | 1% | 0.2% | 83.8% | 91 | invention |
| essai 8 | 15% | 0% | 1% | 0.3% | 83.7% | 65 | invention |
| essai 9 | 25% | 0% | 1% | 0.1% | 73.9% | 97 | invention |

Les matériaux correspondants aux essais de l'invention sont tous transparents c'est-à-dire qu'ils présentent une transmission lumineuse supérieure à 80 % pour une épaisseur d'échantillon de 3 mm. La photo 1 représentative des images AFM obtenues à partir de l'échantillon de l'essai 9 montre une nano-structuration typique des copolymères à blocs montrant que la réaction à bien eu lieu entre la polyalcoxyamine et le méthacrylate de méthyle. Lorsque qu'un essai est conduit à l'aide d'un copolymère PAbu/styrene de masse moléculaire en poids similaire mais ne présentant pas de fonctionnalité alcoxyamine, en présence de peroxyde et d'amine le matériau résultant est trouble, c'est-à-dire qu'il présente une transmission largement inférieure à 80 % pour une épaisseur d'échantillon de 3 mm. Dans ce dernier cas il y a macro-séparation de phase entre le copolymère PAbu/styrène et le PMMA. Il n'y a pas eu allongement de chaine du PAbu/styrène.

Exemple 5 :

Polymérisation du méthacrylate de méthyle en présence d'un macro-amorceur, dans un mélange de résine epoxy.
Etape 1 : Les polymérisations sont réalisées en solution dans une résine epoxy DGEBA (Bis(4-(2,3-epoxypropoxy)phenyl)propane, Equivalent epoxy=186g/eq, nom commercial: LY556 HUNSTMAN), à température ambiante 25°C à pression atmosphérique.
Le peroxyde choisi est le peroxyde de benzoyle (BPO), l'amine est la diméthyle para toluidine (DMPT). Les

solutions sont préparées sous agitation magnétique, puis dégazées sous vide pendant 15 minutes ceci afin d'éliminer les gaz dissouts qui pourraient nuire à la polymérisation.

On prépare dans une fiole en verre un mélange contenant

1.5g de la polyalcoxyamine macro-amorceur de l'exemple 2,
8.5g de méthacrylate de méthyle
0.1g de peroxyde de benzoyle
90g de résine DGEBA

Une fois le mélange homogène, on ajoute 0.01g d'amine DMPT sous agitation pour obtenir un mélange homogène.

Etape 2

La résine DGEBA est polymérisée à l'aide du durcisseur Jeffamine (Polyoxypropylenetriamine, M=400g/mol, nom commercial : T403 HUNSTMAN).

36.5g de durcisseur Jeffamine est ajouté au mélange issu de l'étape 1.

On obtient un matériau dur au bout de 2h à température ambiante. Les images AFM montrent une structuration à l'échelle nanométrique (photo 2).

## Revendications

1. Procédé de polymérisation radicalaire comprenant les étapes suivantes :

   - Mélange comprenant au moins un monomère en présence d'au moins un réducteur de nitroxyde et au moins une alcoxyamine,
   - conduite de la polymérisation du mélange à une température comprise entre -50°C et 80 °C jusqu'à conversion complète des monomères.

2. Procédé selon la revendication 1 dans lequel au moins une alcoxyamine est monofonctionnelle.

3. Procédé selon la revendication 1 dans lequel au moins une alcoxyamine est multifonctionnelle.

4. Procédé selon la revendication 1 dans lequel au moins une alcoxyamine est une alcoxyamine macromoléculaire.

5. Procédé selon la revendication 1 dans lequel au moins un réducteur de nitroxyde est un radical.

6. Procédé selon la revendication 1 dans lequel au moins un radical est issu de la décomposition d'un amorceur radicalaire.

7. Procédé selon la revendication 1 dans lequel au moins un radical est issu de la décomposition d'un peroxyde en présence d'une amine.

8. Procédé selon la revendication 7 dans lequel au moins un peroxyde est le peroxyde de benzoyle.

9. Procédé selon la revendication 8 dans lequel l'amine est la diméthyle para toluidine.

10. Procédé selon la revendication 1 dans lequel la polymérisation se fait en présence d'un matériau hôte.

11. Procédé selon la revendication 10 dans lequel le matériau hôte est choisi parmi les fibres tissées ou non tissées, les résine époxy, polyuréthane, polyester.

12. Utilisation du procédé selon l'une des revendications 1 à 11 pour la fabrication de colles, de pièces composites, de vernis, revêtements, l'impression 3D.

13. Objet obtenu à l'aide d'une utilisation selon la revendication 12.

## Patentansprüche

1. Radikalpolymerisationsverfahren, das folgende Schritte umfasst:

   - Mischung, umfassend mindestens ein Monomer in Gegenwart von mindestens einem Nitroxid-Reduktionsmittel und mindestens einem Alkoxyamin,
   - Durchführung der Polymerisation der Mischung bei einer Temperatur zwischen -50 °C und 80 °C bis zur vollständigen Umsetzung der Monomere.

2. Verfahren nach Anspruch 1, bei dem mindestens ein Alkoxyamin monofunktionell ist.

3. Verfahren nach Anspruch 1, bei dem mindestens ein Alkoxyamin multifunktionell ist.

4. Verfahren nach Anspruch 1, bei dem es sich bei mindestens einem Alkoxyamin um ein makromolekulares Alkoxyamin handelt.

5. Verfahren nach Anspruch 1, bei dem es sich bei mindestens einem Nitroxid-Reduktionsmittel um ein Radikal handelt.

6. Verfahren nach Anspruch 1, bei dem mindestens ein Radikal aus der Zersetzung eines Radikalinitiators stammt.

7. Verfahren nach Anspruch 1, bei dem mindestens ein Radikal aus der Zersetzung eines Peroxids in Gegenwart eines Amins stammt.

8. Verfahren nach Anspruch 7, bei dem es sich bei mindestens einem Peroxid um Benzoylperoxid handelt.

9. Verfahren nach Anspruch 8, bei dem es sich bei dem Amin um Dimethyl-para-toluidin handelt.

10. Verfahren nach Anspruch 1, bei dem die Polymerisation in Gegenwart eines Wirtsmaterials durchgeführt wird.

11. Verfahren nach Anspruch 10, bei dem das Wirtsmaterial aus gewebten oder ungewebten Fasern und Epoxid-, Polyurethan- und Polyesterharzen ausgewählt wird.

12. Verwendung des Verfahrens nach einem der Ansprüche 1 bis 11 zur Herstellung von Klebstoffen, Verbundteilen, Lacken und Beschichtungen und für den 3D-Druck.

13. Gegenstand, erhalten mit Hilfe einer Verwendung nach Anspruch 12.

## Claims

1. Radical polymerization process comprising the following steps:

   - mixture comprising at least one monomer in the presence of at least one nitroxide reducing agent and at least one alkoxyamine,
   - polymerization of the mixture at a temperature of between -50°C and 80°C until the monomers have been fully converted.

2. Process according to Claim 1, in which at least one alkoxyamine is monofunctional.

3. Process according to Claim 1, in which at least one alkoxyamine is multifunctional.

4. Process according to Claim 1, in which at least one alkoxyamine is a macromolecular alkoxyamine.

5. Process according to Claim 1, in which at least one nitroxide reducing agent is a radical.

6. Process according to Claim 1, in which at least one radical is obtained from the decomposition of a radical initiator.

7. Process according to Claim 1, in which at least one radical is obtained from the decomposition of a peroxide in the

presence of an amine.

**8.** Process according to Claim 7, in which at least one peroxide is benzoyl peroxide.

**9.** Process according to Claim 8, in which the amine is dimethyl-para-toluidine.

**10.** Process according to Claim 1, in which the polymerization is performed in the presence of a host material.

**11.** Process according to Claim 10, in which the host material is chosen from woven or nonwoven fibers, polyester, polyurethane and epoxy resins.

**12.** Use of the process according to one of Claims 1 to 11 for the manufacture of bonding agents, composite parts, varnishes, for coatings and for 3D printing.

**13.** Object obtained by means of the use according to Claim 12.

Photo 1:

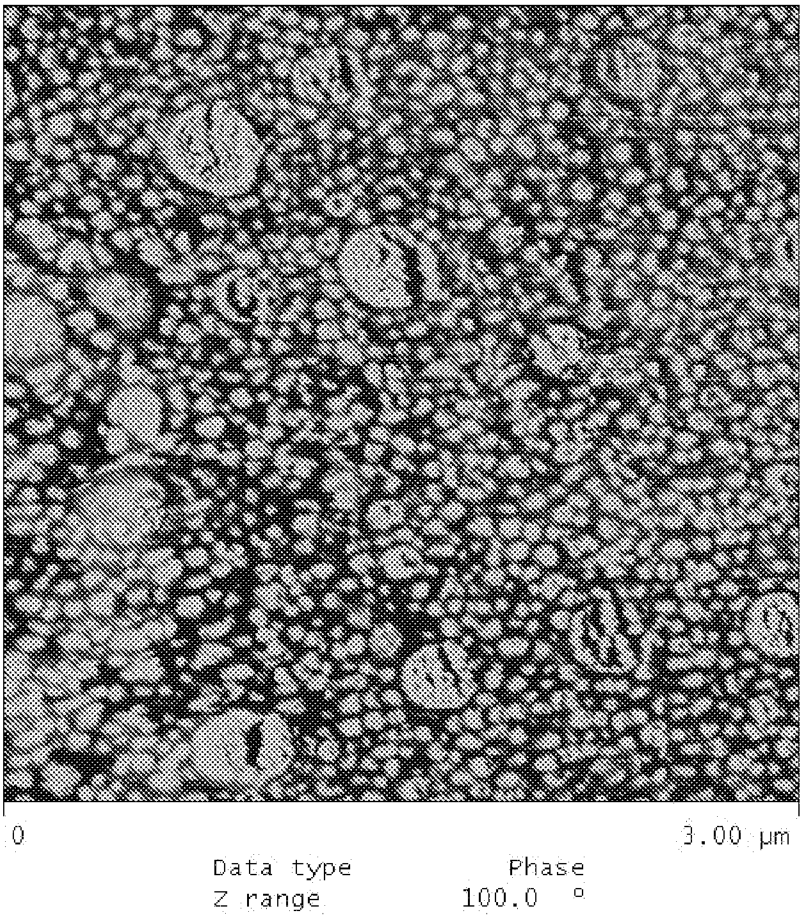


Photo 2 :

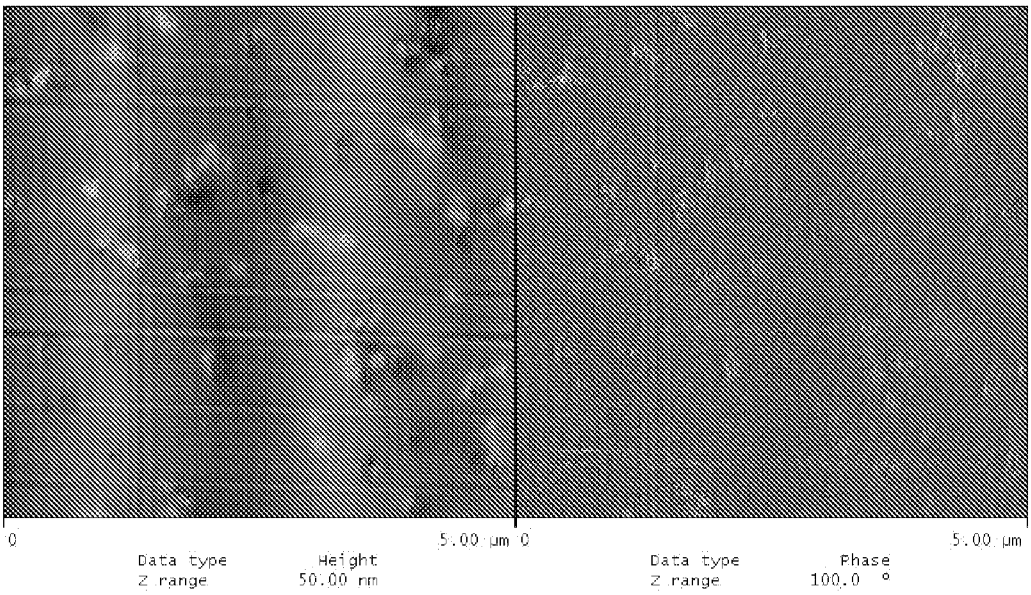

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 0760824 A
- WO 03074572 A
- WO 03062293 A
- FR 2791979
- WO 0606152 A


### Littérature non-brevet citée dans la description


- **QIU K. et al.** *polymer communications,* 1985, (1), 76-81
- *Accounts of Chemical Research,* 1976, vol. 9, 13-19
- **D. GRESZTA.** *Macromolecules,* 1996, vol. 29, 7661-7670